# EUROPÄISCHE PATENTANMELDUNG

(11) **EP 1 294 147 A1**
(43) Veröffentlichungstag der Anmeldung: **19.03.2003**
(21) Anmeldenummer: 01122103.3
(22) Anmeldetag: 14.09.2001
(51) Int. Cl.: H04L 12/66, H04M 7/00, H04L 12/64, H04M 3/56

(54) **Einrichtung zum Verbinden eines Funknetzes mit einem drahtgebundenen Teilnehmer**

(71) Anmelder: AEG MOBILE COMMUNICATION GmbH, D-89081 Ulm (DE)
(72) Erfinder: Hieb, Harry, Dipl.-Ing., 89077 Ulm / Donau (DE); Michelsen, Stefan, Dipl.-Ing., 89081 Ulm / Donau (DE); Zurblihn, Bruno, Dipl.-Ing., 89291 Holzheim (DE)
(74) Vertreter: Körner, Ekkehard, Dipl.-Ing.

(57) **Zusammenfassung**

Eine Einrichtung zum Verbinden eines Funknetzes mit wenigstens einem drahtgebundenen Teilnehmer unter Zuhilfenahme eines paketvermittelnden Nachrichtennetzes enthält eine der Anzahl der mit Teilnehmern im Funknetz unabhängig zu führenden Gespräche entsprechende Anzahl von Funk-Gateways, die mit dem paketvermittelnden Netz verbunden sind und Nutzdaten zwischen den Formaten der beiden teilnehmenden Netze umsetzen, wobei den Funk-Gateways aus dem paketvermittelnden Netz jeweils ein Funk-Steuerungsprotokoll zugeführt ist, in dem funkspezifische Signalisierungen enthalten sind (Figur 1).

## Beschreibung

Paketvermittelnde Nachrichtennetzwerke für Sprachübertragung sind z.B. als VolP-Netzwerke (VolP = Voice over Internet Protocol) bekannt geworden. Ein Telekommunikationssystem, in dem wenigstens zwei unterschiedliche Signalisierungsprotokolle verwendet werden, benötigt Gateway-Signalisierungspunkte zum Umwandeln der Signalisierungsmitteilungen zwischen den Signalisierungsprotokollen (WO 01/06743 A1).

Hierzu beschreibt weiter WO 00/54468 ein System und ein Verfahren zum Übermitteln von Anrufen zwischen einem geschalteten Netz, wie beispielsweise dem öffentlichen Telefonnetz, und einem paketvermittelnden Netz, wie beispielsweise dem Internet. Die im Zeichengabesystem Nr. 7 (CCS7) aufbereiteten Mitteilungen werden von dem geschalteten Netzwerk empfangen und werden mittels eines Gateway in ein paketiertes Protokoll umgewandelt. Das Gateway steht mit dem Internet und mit anderen Einrichtungen über ein Internetprotokollnetz in Verbindung.

Die DE 199 58 233 A1 beschreibt ein Gateway zum Verbinden von Telekommunikationsnetzwerken, bei dem ein Nutzkanaldatenumsetzer über zumindest eine zusätzliche Nutzkanal-Datenschnittstelle mit einer Vermittlungsstelle verbunden ist und ein Signalisierungskanaldatenumsetzer zwischen eine bereits existierende Nutz-/Signalisierungskanal-Datenschnittstelle derart eingefügt ist, daß eine auf dieser Datenschnittstelle übertragene Signalisierungsinformation für die zusätzliche Nutzkanaldatenschnittstelle herausgefiltert wird.

Stand der Technik zur Integration eines Funknetzes ist die leitungsgebundene Vermittlungstechnik zur niederfrequenten Audio-Verteilung (NF-Verteilung). Zur Anbindung des Funknetzes an ein paketvermittelndes Netz muß ein analoger Funk-Switch eingesetzt werden, der für das Funk-Steuerungsprotokoll zusätzlich an das paketvermittelnde Netz angeschlossen sein muß. Sämtliche Funksteuersignale werden über dieses paketvermittelnde Netz zwischen dem Funk-Switch und zum Beispiel PC-Arbeitsplätzen ausgetauscht. Der Funk-Switch selbst reicht die NF und Funksteuersignale an das Funknetz weiter.

Eine solche Struktur weist einige Nachteile auf. Die leitungsgebundene Vermittlung für Funknetze erfordert eine sternförmige Verdrahtung und/oder analoge Switche, die die Verteilung und Pegelanpassung der zu übertragenden Nutzsignale übemehmen. Aufgrund der ständigen Bereitstellung der Übertragungswege und der über die normale Signalisierung der Telekommunikation hinausgehenden Anforderungen an das Funk-Steuerungsprotokoll ist es nicht möglich, eine vorhandene Telekommunikationsinfrastruktur, zum Beispiel konventionelle private Vermittlungssysteme, für die Ansteuerung eines Funknetzes zu nutzen.

Einen möglichen Lösungsansatz zur Vermeidung eines analogen Funk-Switches und der damit verbundenen sternförmigen Verdrahtung stellt die aus der Telefonwelt bekannte Konvergenz der leitungsvermittelten und paketvermittelten Netze dar, wie oben beschrieben. Derzeit gängige Protokolle in diesem Zusammenhang sind H.323 und SIP zur Telefonsteuersignalübertragung, sowie RTP/RTCP (Echtzeittransportprotokolle für Audio/Videoübertragung sowie zur Übertragungskontrolle). Die Möglichkeit, Sende/Empfangsgeräte (S/E-Geräte) in Funknetzen in analoger Weise zu verwenden, sind jedoch durch folgende Parameter der Telefonwelt eingeschränkt:
- Telefon kennt keine funkspezifische Signalisierung,
- Telefonverbindung ist immer duplex. In Funknetzen muß aber auch Simplex- oder Semi-Duplex-Kommunikation möglich sein.
- Telefon schafft nur Punkt-zu-Punkt-Verbindungen;
- Verbindungsaufbauzeiten sind größer als 0,5 s;
- eine Dreierkonferenz, wie im Telefonwesen häufig, ist selbst für kleine Funknetze zu gering;
- die Verwendung von MCUs (MCU = Multipoint Conferencing Unit) zur Realisierung von Konferenzen erfordert proportional mit der Anzahl von Teilnehmer steigende Verbindungsaufbauzeiten und bedingt proportional mit der Anzahl der Teilnehmer steigende Verzögerungen des Sprachsignals. Ferner steigt die Netzlast im paketvermittelnden Netz proportional mit der Anzahl der Teilnehmer, da jeder Teilnehmer individuell gemischte Audiodaten benötigt.

Der Erfindung liegt daher die Aufgabe zu Grunde, eine Einrichtung zum Verbinden eines paketvermittelnden Nachrichtennetzwerks mit einem eine Vielzahl von Teilnehmern aufweisenden Funknetz anzugeben, die in besonderer Weise adaptiert ist.

Diese Aufgabe wird durch die Merkmale des Anspruchs 1 gelöst. Vorteilhafte Ausgestaltungen der Erfindung sind Gegenstand der Unteransprüche.

Die von der Erfindung geschaffene Einrichtung ist ein neuartiges Vermittlungssystem, das auf einem paketvermittelnden Netz basiert. Dieses Netzt unterstützt nach Wahl Punkt-zu-Punkt-Verbindungen ("Unicast"-Verbindungen) und Punkt-zu-Multipunkt-Verbindungen ("Multicast"-Verbindungen). Verschiedene Arten von Verbindungsunterstützungen des Netzes sind in den Unteransprüchen beschrieben.

Im Falle von Internet-IP-Netzen ist beispielsweise eine Punkt-zu-Multipunkt-Adressierung möglich. In dem erfindungsgemäßen System kann ein handelsübliches Protokoll zur Sprach- und Telefonsteuersignalübertragung eingesetzt werden, das so adaptiert ist, daß es zusätzlich benutzerdefinierte Informationen zu übertragen erlaubt. Dieses ist beispielsweise mit Hilfe von User-to-User-Mitteilungen unter dem Protokoll H.323 realisierbar. Das Funk-Steuerungsprotokoll läßt sich durch das H.323-Protokoll tunneln. Alternativ hierzu kann ein separater Datenkanal verwendet werden. Als benutzerdefinierte Informationen werden sämtliche funkspezifischen Signalisierungen angesehen, die in einem Funk-Steuerungsprotokoll zusammengefaßt werden, wie beispielsweise für die Öffnung eines Senders durch Betätigung einer PTT-Taste (PTT = Push-to-talk).

Das paketvermittelnde Netzwerk ist vorzugsweise ein IP-Netz. Solche sind weit verbreitet und daher preiswert. Man hat den Vorteil, daß man auf eine vorhandene Infrastruktur zurückgreifen kann. Gleiches gilt für die vorzugsweise zu verwendenden Protokolle H.323 und SIP.

Als Kopplungselement zwischen dem paketvermittelnden Netzwerk und dem analogen oder digitalen Funknetz werden Funk-Gateways eingesetzt, die als Übersetzer zwischen den Protokollen des paketvermittelnden Netzwerks und des Funknetzes fungieren.

Jeder Endpunkt im paketvermittelnden Netz (Funk-Gateways und beispielsweise PC-Arbeitsplätze) baut beim Systemstart eine Punkt-zu-Punkt-Verbindung mit Hilfe eines handelsüblichen Protokolls zur Telefonsteuersignalübertragung zu den übrigen Endpunkten auf. Hierdurch werden Datenkanäle geöffnet, die für die individuelle Tunnelung des Funk-Steuerungsprotokolls genutzt werden sollen. Anschließend wird ebenfalls mit dem handelsüblichen Protokoll ein Audiokanal geöffnet. Unterstützt das paketvermittelnde Netz lediglich Punkt-zu-Punkt-Verbindungen, werden auch die Audiokanäle als Punkt-zu-Punkt-Verbindungen aufgebaut. Andererseits ist es von Vorteil, eine Punkt-zu-Multipunkt-Verbindung für die Audiokanäle zu den übrigen Endpunkten herzustellen. Hierdurch entsteht ein vermaschtes System aus Audiokanälen, in dem jeder Endpunkt in der Lage ist, die Audiodaten eines anderen Endpunktes zu empfangen. Dieses ist von zentraler Bedeutung für die Realisierung fundamentaler Funkbetriebsfunktionen. Es ist aber auch möglich, Signalisierungen über Punkt-zu-Multipunkt-Verbindungen zu übertragen. Vorteilhaft bei einer Punkt-zu-Multipunkt-Verbindung ist, daß im Gegensatz zur Punkt-zu-Punkt-Verbindung keine zusätzlichen Sprachverzögerungszeiten auftreten.

Dieser Initialisierungsprozeß hat zur Folge, daß jeder Endpunkt individuell durch die etablierten Punkt-zu-Punkt-Verbindungen mit dem getunnelten Funk-Steuerungsprotokoll versorgt werden kann und daß jeder Endpunkt zusätzlich Audio-Verbindungen besitzt, die als Punkt-zu-Punkt- oder Punkt-zu-Multipunkt-Verbindung realisiert sein können. Der fundamentale Vorteil gegenüber der Telefonwelt ist, daß keine weitere (Rufnummern-)Wahl erforderlich ist und somit keine zusätzlichen Verzögerungen auftreten. Sämtliche Funk-Gateways sind nach dem Initialisierungsprozeß ständig betriebsbereit, wobei diese Funk-Gateways nicht exklusiv einem, sondern allen weiteren Endpunkten zur Kommunikation zur Verfügung stehen.

Die Initialisierung des Systems hat also den Vorteil, daß das System quasi schon "wach" ist, wenn man auf es zugreifen will. Es muß vor einem Verbindungsaufbau nicht erst hochgefahren werden und ist daher sofort verfügbar, anders als in der Telefontechnik, wo dem Teilnehmer stets eine Wartezeit für den Verbindungsaufbau abverlangt wird.

In dem erfindungsgemäßen System koppeln Funk-Gateways das paketvermittelnde Netzwerk mit dem, je nach Ausführung analogen oder digitalen, Funknetz.

Im Falle eines analogen Funknetzes wird die digitalisierte Sprache aus dem paketvermittelnden Netzwerk in niederfrequente Audiosignale umgewandelt und vom Funk-Gateway direkt einem zugehörigen S/E-Gerät zugeführt, das in einem individuell zugewiesenen Funkkanal arbeitet. Die Steuersignale aus dem Funk-Steuerungsprotokoll werden in Signale umgewandelt, die dem S/E-Gerät ebenfalls zur Verfügung gestellt werden und die dessen Hardware steuern. Jedem S/E-Gerät steht ein eigenes Funk-Gateway zur Verfügung.

Im Falle eines digitalen Funknetzes werden an den Funk-Switch des digitalen Systems Adressinformationen (zum Beispiel Rufnummern im digitalen Netz) übertragen, wobei die Sprache wahlweise als niederfrequente Signale oder aber in kodierter Form übermittelt wird. Im Gegensatz zum analogen Funk ist aber nurmehr ein S/E-Gerät vorhanden, das sämtliche Funkteilnehmer bedient. Die einzelnen Nachrichtenkanäle werden durch Zeitteilung (Zeitschlitze), Frequenzteilung (Frequenzsprung) oder andere bekannte Techniken des Digitalfunks implementiert, wobei jedoch die Anzahl der Funk-Gateways prinzipiell der Anzahl der unabhängig zu führenden Funkgespräche entspricht. In diesem Zusammenhang ist allerdings anzumerken, daß eine Mehrfachnutzung eines einzelnen Funk-Gateways grundsätzlich möglich ist, beispielsweise bei Zeitteilbetrieb. Die Erfindung soll dieses nicht ausschließen.

Analoge und digitale Funknetze benötigen größtenteils unterschiedliche Signalisierungen. Eine besonders flexible Art der Erfüllung der verschiedenen Anforderungen stellt die Tunnelung des Funk-Steuerungsprotokolls durch das handelsübliche Protokoll zur Sprach- und Telefonsteuersignalübertragung dar, da hierbei alle Mechanismen zum Verbindungsaufbau im paketvermittelnden Netz bereits implementiert sind. Das Funk-Steuerungsprotokoll selbst kann beispielsweise als Klartext im ASCII-Format übertragen werden, wobei auch eine Kodierung und gegebenenfalls Komprimierung der Nachrichtendaten erfolgen kann.

Die in der Telefonwelt üblichen Punkt-zu-Punkt-Verbindungen existieren beispielsweise auch zwischen einem PC-Arbeitsplatz und einem Funk-Gateway. Das ist ein Funkkanal bei analogem Funk und ein direkt adressierter Funkteilnehmer beim digitalen Funk. Allerdings kommen hierbei verschiedene Varianten der Sprechrichtung vor: Simplex-Betrieb, Semi-Duplex-Betrieb und Duplex-Betrieb.

Die jeweilige Betriebsart wird bei der Erfindung mit Hilfe des Funk-Steuerungsprotokolls beispielsweise von einem PC-Arbeitsplatz aus eingestellt. Die Audiodaten des PC-Arbeitsplatzes bzw. des Funk-Gateways werden je nach paketvermittelndem Netz bei der Erfindung über die oben erläuterte Punkt-zu-Punkt- bzw. Punkt-zu-Multipunkt-Verbindung übertragen. Im Fälle einer Punkt-zu-Multipunkt-Verbindung verarbeiten allerdings nur die an der Kommunikation beteiligten Endpunkte, d.h. der PC-Arbeitsplatz und das angesprochene Funk-Gateway, diese Audiodaten und übertragen diese auf das andere Medium, z.B. ein Lautsprecher. Die Sprechrichtung im Simplex- bzw. Semi-Duplex-Betrieb wird dabei stets durch die entsprechende Signalisierung mit Hilfe des Funk-Steuerungsprotokolls eingestellt.

Die erfindungsgemäße Einrichtung ist aber auch in der Lage, bei der Erstellung von Funk-Funk-Verbindungen mitzuwirken. Diese können beispielsweise durch einen PC-Arbeitsplatz errichtet werden. Es handelt sich hierbei ebenfalls um Punkt-zu-Punkt-Kommunikationsbeziehungen.

Es ist ein besonderer Vorteil der Erfindung, daß die erfindungsgemäße Einrichtung Vermittlungsaufgaben erfüllt, ohne daß es einer eigens dazu bestimmten Vermittlungshardware bedarf, denn der Verbindungsaufbau wird unmittelbar durch die Adressierung der Nachrichtenpakete beim sendenden Teilnehmer durchgeführt. Es handelt sich somit um ein dezentrales System, wodurch kein Ausfall einer zentralen Komponente auftreten kann. Eine derartige Architektur ist besonders in kleinen paketvermittelnden, nur wenige Endpunkte umfassenden Netzen von Vorteil, da der gesamte Signalisierungsaufwand gering bleibt. Alternativ hierzu kann eine zentrale Architektur gewählt werden, wobei für die Vermittlungsaufgaben eine eigene Vermittlungshardware vorgesehen ist. Dieses kann bei großen Netzen sinnvoll sein, weil sonst der Signalisierungsaufwand aufgrund der Vielzahl von Teilnehmern zu stark ansteigen würde.

Eine in der gewöhnlichen Telefonwelt in dieser Form nicht bekannte Kommunikationsbeziehung stellt eine Konferenzschaltung dar, an der mehr als drei Endpunkte teilnehmen und die die drei oben genannten Sprechrichtungen Simplex, Semi-Duplex und Duplex besitzen kann. Bei einem paketvermittelnden Netz, das nur Punkt-zu-Punkt-Verbindungen unterstützt, muß jeder Endpunkt seine Audiodaten sequentiell an alle übrigen Endpunkte übertragen. Anders verhält es sich bei einem paketvermittelnden Netz mit Punkt-zu-Multipunkt-Unterstützung. Aufgrund der Punkt-zu-Multipunkt-Verbindungen jedes einzelnen Endpunktes zu den übrigen Endpunkten stehen jedem an einer Konferenz teilnehmenden Endpunkt alle Audiodaten der übrigen Endpunkte zur Verfügung.

Wenn Simplex- oder Semi-Duplex-Betrieb herrscht, wird über das Funk-Steuerungsprotokoll der aktive Sprecher bestimmt (ein Endpunkt übernimmt die Entscheidungsfunktion, z.B. erster Konferenzteilnehmer). Nur solche Audiodaten, die von dem aktiven Sprecher ausgehen, werden über das paketvermittelnde Netz übertragen. Im Duplex-Betrieb darf jeder Endpunkt Audiodaten abgeben, und so generiert jeder Endpunkt aus den einzelnen empfangenen Audiodaten der übrigen Konferenzteilnehmer ein Summenaudiosignal und überträgt dieses gegebenenfalls an ein anderes Medium, z.B. einen Lautsprecher. Der hierfür erforderliche Aufwand ist sehr viel geringer als der bei der Errichtung einer Konferenzschaltung in der üblichen Telefonwelt.

Hierbei kann dafür Sorge getragen werden, daß bei der Summenbildung der empfangenen Audiosignale das eigene Audiosignal des Endpunkts im Summensignal nicht enthalten ist. Hierfür kommen mehrere Alternativen in Betracht: a) Die Summenbildung erfolgt in jedem Endpunkt. Dann bleibt das eigene Audiosignal bei der Summenbildung unberücksichtigt. Vorteil dieser Verfahrensweise ist eine geringe Netzbelastung. b) Die Summenbildung erfolgt zentral, so daß allen Endpunkten gleiche Summensignale erhalten. Dann zieht jeder Endpunkt sein eigenes Audiosignal vom Summensignal wieder ab, wobei freilich die Zeitverzögerungen zu berücksichtigen sind. Vorteil dieser Verfahrensweise ist eine geringe Belastung der Zentrale, und c) Zentral werden mehrere individuelle Summensignale gebildet und an die einzelnen Endpunkte gesandt, wobei jedoch das von dem jeweiligen Endpunkt stammende Audiosignal im individuellen Summensignal, das an diesen Endpunkt gesandt wird, fehlt. Diese Verfahrensweise ist am aufwendigsten. Sie hat zudem eine hohe Netzbelastung zur Folge.

Ähnlich verhält es sich mit dem sogenannten "Mithören" einer fremden Verbindung (PC-Arbeitsplatz zum Funkteilnehmer, Funk-Funk-Verbindung, Konferenzschaltung), wobei hier die Vorteile der Punkt-zu-Multipunkt-Verbindungen besonders deutlich werden. Aufgrund der Punkt-zu-Multipunkt-Verbindungen stehen jedem Endpunkt alle Audiodaten zur Verfügung. Durch aktive Selektion der Audiodaten der an der Kommunikation beteiligten Endpunkte und Übertragung dieser Daten an ein anderes Medium, zum Beispiel an den PC-Lautsprecher, kann an einem PC-Arbeitsplatz der Nachrichtenverkehr mitgehört werden. Dazu muß jeder Endpunkt lediglich durch das Funk-Steuerungsprotokoll über jede existierende Verbindung informiert werden, damit die entsprechende Selektion der Audiodaten möglich ist. Im Simplex- oder Semi-Duplex-Betrieb müssen nur die Audiodaten des aktiven Sprechers hörbar gemacht werden. Im Duplex-Betrieb generiert jeder Endpunkt aus den einzelnen Audiodaten der anderen abzuhörenden Endpunkte ein Summenaudiosignal und überträgt dieses zu Beispiel an den PC-Lautsprecher.

Unterstützt das paketvermittelnde Netz lediglich Punkt-zu-Punkt-Verbindungen, so erfordert dieses das Absetzen eines Mithör-Befehls an das entsprechende Funk-Gateway (funkkanalbezogenes Mithören) bzw. an beispielsweise den entsprechenden PC-Arbeitsplatz (arbeitsplatzbezogenes Mithören) über das Funk-Steuerungsprotokoll. Im ersten Fall wird dadurch das Funk-Gateway veranlaßt, sequentiell seine Audiodaten sowohl an den Kommunikationspartner, als auch an den mithörenden Endpunkt zu senden. Ferner weist das Funk-Gateway über das Funk-Steuerungsprotokoll einerseits den Kommunikationspartner an, seine Audiodaten ebenfalls an den mithörenden Endpunkt zu senden, und andererseits den mithörenden Endpunkt, diese Audiodaten zu empfangen. Im zweiten Fall (arbeitsplatzbezogenes Mithören) sind die Rollen von Funk-Gateway und PC-Arbeitsplatz vertauscht. Der mithörende Endpunkt kann den gesamten Audioverkehr des "angezapften" PC-Arbeitsplatzes verfolgen, gleichgültig, mit wem dieser geführt wird.

Die Erfindung wird nachfolgend unter Bezugnahme auf die Zeichnungen näher erläutert. Es zeigt:
Figur 1 eine schematische Darstellung einer erfindungsgemäßen Einrichtung zum Verbinden eines eine Vielzahl von Teilnehmern aufweisenden Funknetzes mit einem paketvermittelnden Nachrichtennetzwerk, und
Fig. 2 bis 16 schematisch Beispiele von Signalverläufen in verschiedenen Betriebsfällen einer Einrichtung der Erfindung.

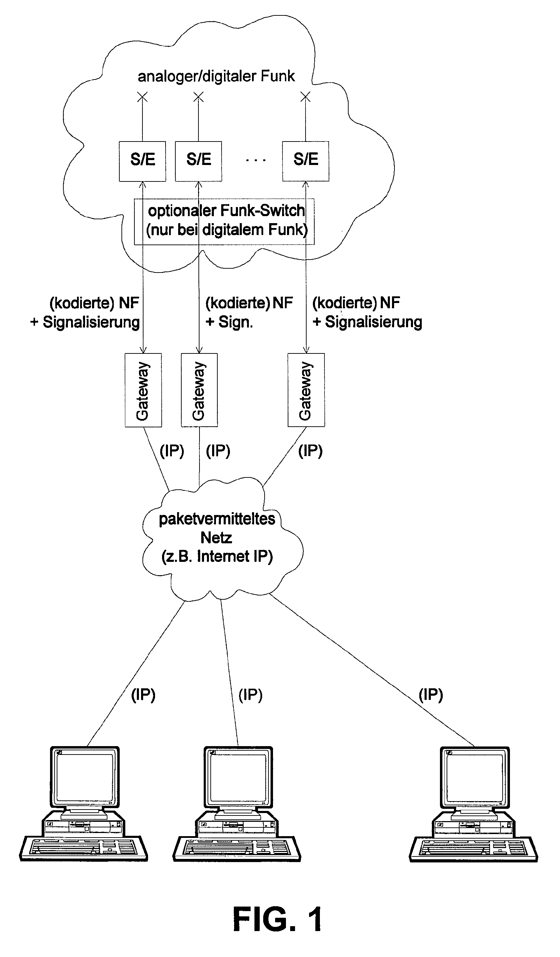

In Figur 1 ist schematisch ein paketvermittelndes Netz dargestellt, an dem drei PCs als Arbeitsplätze angeschlossen sind. Die Übertragung der Information zu und von den PCs erfolgt auf unterster Ebene paketiert beispielsweise über das Internetprotokoll. Höhere Protokolle, wie z.B. H.323, SIP oder RTP setzen hierauf auf, wobei die funkspezifischen Signalisierungen getunnelt werden.

Von dem paketvermittelnden Netz gelangen die Internetpakete zu Funk-Gateways, wo eine Umwandlung in funkspezifische Signale erfolgt, beispielsweise in NF, gegebenenfalls kodierte NF, und Signalisierungen. Im analogen Netz ist jedes Funk-Gateway mit einem zugehörigen Funk-Sende/Empfangs-Gerät (S/E-Gerät) verbunden, das in einem individuell zugewiesenen Frequenzkanal arbeitet. Die NF und Signalisierung gelangen zu den einzelnen S/E-Geräten, von wo die Verbindungen zu externen, insbesondere mobilen Funkstationen hergestellt werden. Ist das Funknetz ein digitales Netz, sind die Funk-Gateways mit einem Funk-Switch verbunden, an den ein allen Gesprächskanälen gemeinsames S/E-Gerät angeschlossen ist. Der Funk-Switch besorgt dann das Management des S/E-Gerätes in an sich bekannter Weise.

Entsprechend ist umgekehrt der Weg von den Funk-S/E-Geräten über die Funk-Gateways in das paketvermittelnde Netz und von dort zu den Arbeitsplätzen, wobei die Signalumsetzung in den Funk-Gateways in umgekehrter Richtung erfolgt.

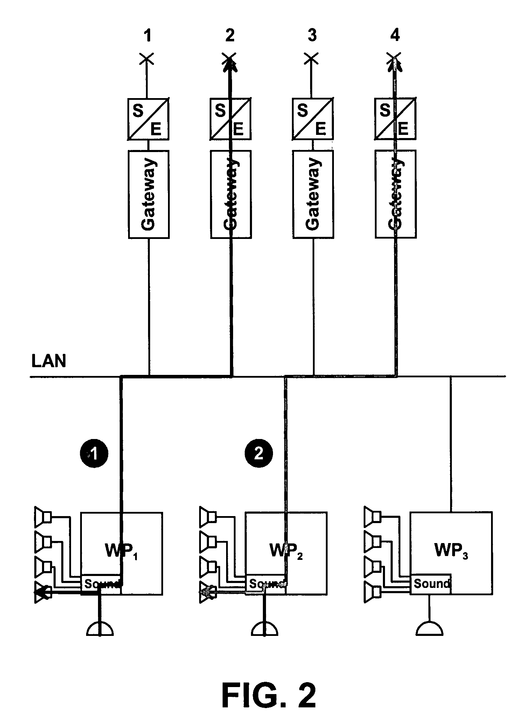

Nachfolgend sollen unter Bezugnahme auf die Fig. 2 bis 16 verschiedene Betriebsfunktionen, die mit der Erfindung ausführbar sind, anhand verschiedener Verbindungen erläutert werden. Bevor die einzelnen Beispiele erläutert werden, soll nochmals auf die verschiedenen Kommunikationstypen hingewiesen werden.

Zu unterscheiden sind immer Punkt-zu-Punkt- und Punkt-zu-Multipunkt-Verbindungen, wobei sowohl das Funk-Steuerungsprotokoll als auch die Kommunikationsdaten (z.B. Audiodaten, aber auch sonstige Nutzdaten) über beide Verbindungstypen übermittelt werden können. Im Folgenden wird angenommen, daß das Funk-Steuerungsprotokoll immer über Punkt-zu-Punkt-Verbindungen übertragen wird. Für die Kommunikationsdaten (nachfolgend soll der Einfachheit halber nur von Audiodaten gesprochen werden) werden beide Verbindungstypen betrachtet.

Figur 2 zeigt die einfachste aller Kommunikationsmöglichkeiten. Sie ist die Kommunikation zwischen einem Arbeitsplatz WP (WP = Work Position) und einem beweglichen Funkgerät. Voraussetzung dafür sind die beschriebenen Punkt-zu-Punkt-Verbindungen, die unmittelbar beim Systemstart zwischen allen Komponenten des Systems eingerichtet und während des Betriebs aufrechterhalten werden. Die Software am Arbeitsplatz übernimmt das gesamte Management.

Die Figur 2 zeigt eine Punkt-zu-Punkt-Adressierung, bei der IP-Pakete nur an eine entfernte Funkstation gesandt werden (paketvermittelndes Netz ohne Punkt-zu-Multipunkt-Unterstützung). Nur diese Adressierungsform realisiert streng genommen eine Punkt-zu-Punkt-Verbindung. Wie bereits erwähnt, existieren solche Verbindungen bereits zu allen Teilnehmern, allerdings erfolgt keinerlei NF-Übertragung über das LAN (örtliches Leitungsnetz, LAN = Local Area Network), solange kein Arbeitsplatz WP und kein mobiler Funkteilnehmer die PTT-Taste drückt. Die NF-Übertragung findet erst statt, wenn ein Funkkanal durch einen Arbeitsplatz WP belegt wird und anschließend PTT signalisiert wird. In Figur 2 ist eingezeichnet, daß der erste Arbeitsplatz WP₁ den Funkkanal #2 anspricht, während der zweite Arbeitsplatz WP₂ den Funkkanal #4 anspricht.

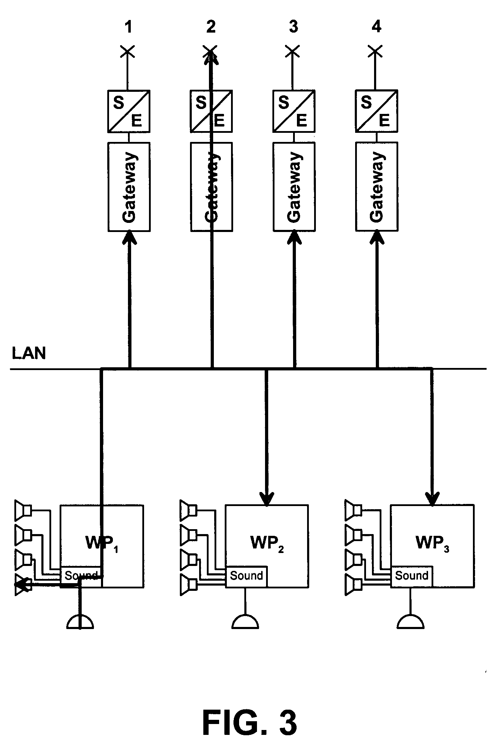

Figur 3 zeigt eine WP-Funk-Verbindung bei Punkt-zu-Multipunkt-Adressierung. Im Gegensatz zur Punkt-zu-Punkt-Adressierung werden die IP-Pakete von einem Arbeitsplatz, beispielsweise WP₁, an mehrere Empfänger gesandt. Dabei wird das einzelne Paket nur einmal auf das LAN gegeben. Hierfür ist ein bestimmter Adressbereich definiert, wobei die Empfänger den Empfang von Punkt-zu-Multipunkt-IP-Paketen einer bestimmten Zieladresse zulassen müssen. Hierdurch wird es möglich, allen Komponenten, also allen Funkstationen und allen Arbeitsplätzen, gleichzeitig die IP-Pakete zur Verfügung zu stellen. Die Belastung des Netzes entspricht der einer einzelnen Punkt-zu-Punkt-Verbindung, obwohl mehrere Empfänger die Audionachricht empfangen können. In Figur 3 sind zwar zwei Punkt-zu-Multipunkt-Audionachrichtenströme eingezeichnet, und zwar einer vom Arbeitsplatz WP₁ und einer vom Funkkanal #2 ausgehend, die zu allen anderen Endpunkten geleitet sind, allerdings empfängt und verarbeitet nur WP₁ den Nachrichtenstrom vom Funkkanal #2 und umgekehrt.

Zur Realisierung einer Arbeitsplatz/Funk-Draht-Kommunikation können verschiedene Anschaltungsvariationen gewählt werden.

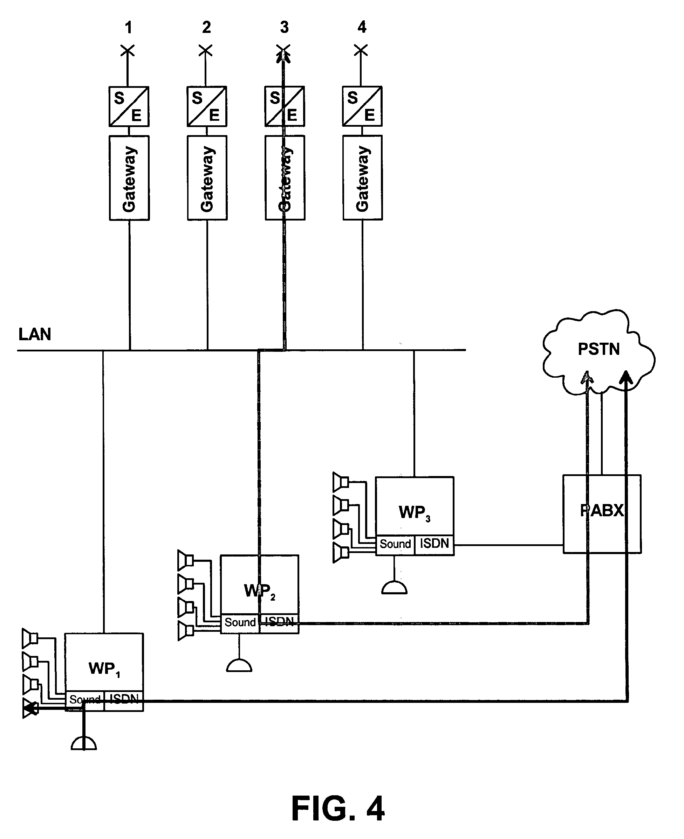

Figur 4 macht deutlich, daß jeder Arbeitsplatz mit einer ISDN-Karte ausgerüstet sein und über eine private Vermittlungsstation PABX mit dem öffentlichen Telefonnetz PSTN verbunden sein kann. Im dargestellten Beispiel sind zwei augenblicklich eingerichtete Verbindungen vom öffentlichen Telefonnetz zu dem Arbeitsplatz WP₁ und über WP₂ zum Funkkanal #3 dargestellt. Die WP-Software übernimmt dabei das Management. Von den Arbeitsplätzen - hier WP₂ - kann dann die Verbindung zu den entfernten Funkgeräten hergestellt werden.

Gemäß Figur 4 wird das über das drahtgebundene Leitungsnetz dem Arbeitsplatz zugeführte NF-Signal dort in ein IP-Protokoll umgesetzt, und eine durch die Initialisierung des Systems bereits bestehende Punkt-zu-Punkt-Verbindung wird aktiviert und die NF zu einem ausgesuchten Funkkanal geleitet. Der Verbindungsaufbau erfolgt dann in der bereits beschriebene Weise. Figur 4 zeigt eine solche Verbindung vom öffentlichen Netz über Arbeitsplatz WP₂ zum Funkkanal #3.

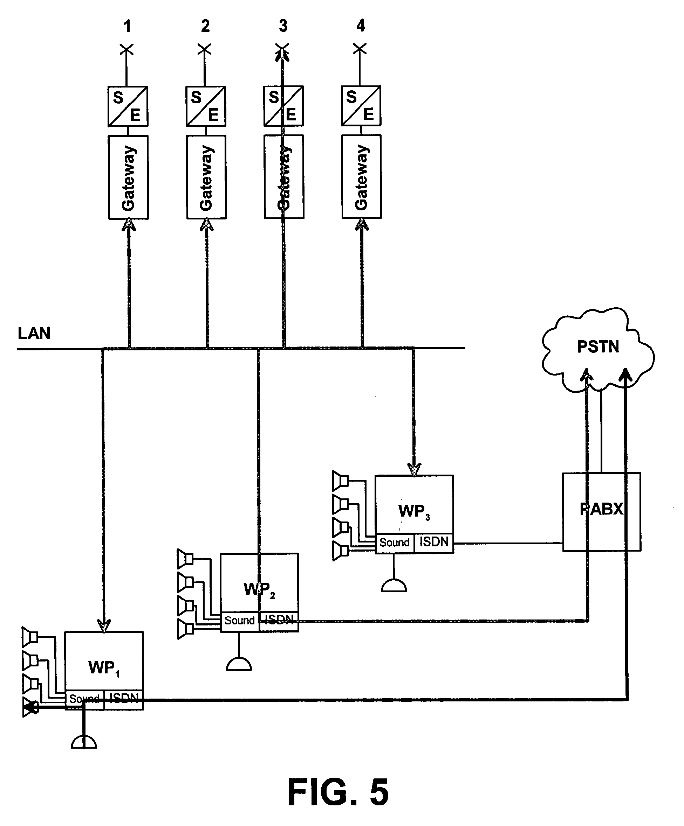

Zeigte die Figur 4 eine Punkt-zu-Punkt-Adressierung, ist in Figur 5 eine Punkt-zu-Multipunkt-Adressierung gezeigt. Die zwischen dem öffentlichen Netz und dem Arbeitsplatz WP₂ ausgetauschten Nachrichten sind für den Funkkanal #3 bestimmt und werden dorthin geleitet, jedoch stehen auch die anderen Funkkanäle und anderen Arbeitsplätze für den Empfang dieser Nachrichten bereit, ohne am Nachrichtenaustausch teilnehmen zu können, da nicht dazu aufgefordert. WP₁ und WP₃wie auch die Funkkanäle ## 1, 2 und 4 nehmen an der Audioverteilung nicht teil.

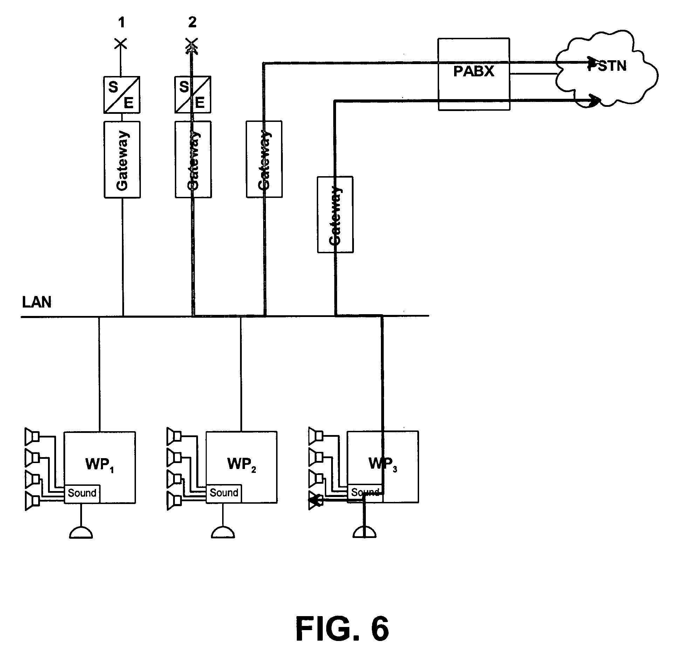

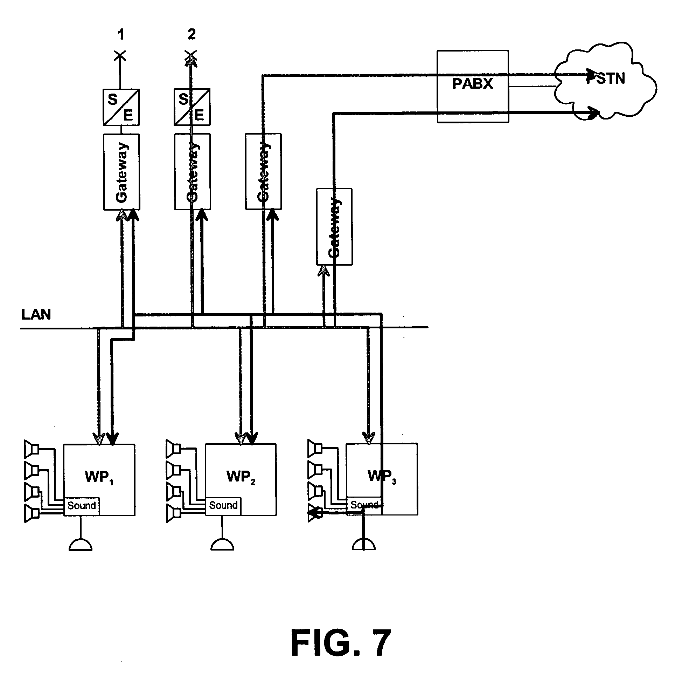

Figuren 6 und 7 zeigen die zweite Variante der PSTN-Anschaltung (Unicast-/Multicast-Adressierung). Die private Vermittlungsstation PABX wird direkt mit NF und Steuersignalen an wenigstens ein Funk-Gateway angeschlossen. Das Vorliegen eines Gesprächs aus dem PSTN wird durch das Funk-Steuerungsprotokoll an die Arbeitsplätze signalisiert. Das Gespräch kann anschließend durch den Arbeitsplatz angenommen werden. Soll eine Funk-Draht-Kommunikation hergestellt werden, so muß dieses durch einen Arbeitsplatz veranlaßt werden. Dieser Fall entspricht einer Funk-Funk-Verbindung und wird nachfolgend behandelt.

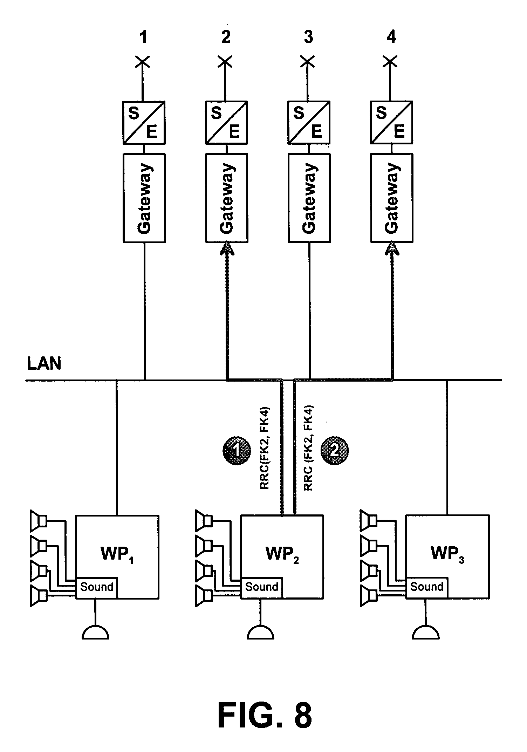

Figur 8 zeigt die Signalisierung einer Funk-Funk-Verbindung. Eine solche wird stets von einer WP initiiert, hier von WP₂. Sie sendet Instruktionen an die beiden Funk-Gateways für die S/E-Geräte, die den Funkkanälen #2 und #4 zugeordnet sind. Die Funk-Gateways werden hierdurch veranlaßt, Audiodatenströme an den Funkkanal zu senden und umgekehrt davon zu empfangen. Wie Figur 8 zeigt, sendet der Arbeitsplatz WP₂ an das Funk-Gateway des Funkkanals #2 und anschließend an das Funk-Gateway des Funkkanals #4 die Aufforderung zur Funk-Funk-Kommunikation. Bei der Verteilung der Audionachrichten ist, wie im zuvor erläuterten Fall, zwischen Punkt-zu-Punkt- und Punkt-zu-Multipunkt-Adressierung zu unterscheiden.

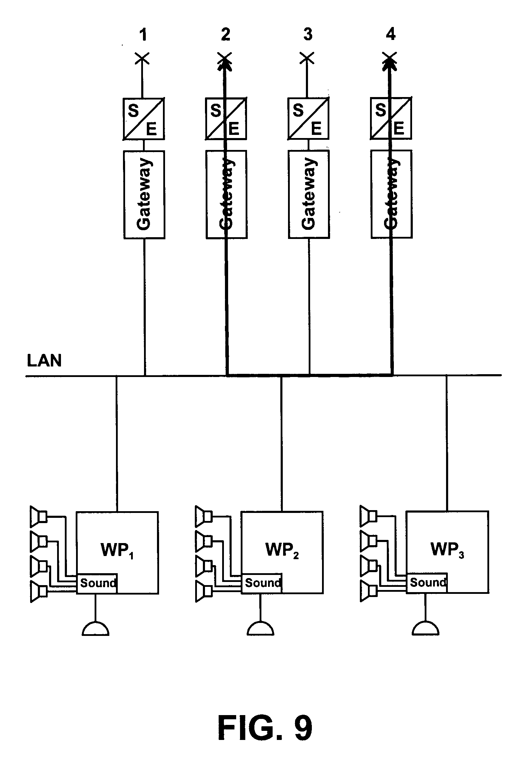

Figur 9 zeigt die Audioverteilung bei Punkt-zu-Punkt-Adressierung nach Initiierung der Funk-Funk-Verbindung. In diesem Falle findet ausschließlich eine Punkt-zu-Punkt-Verbindung zwischen zwei Funkkanälen, hier #2 und #4, statt, an der wegen der Paketierung innerhalb des paketvermittelnden Netzes letzteres, nicht jedoch einer der Arbeitsplätze WP, an der Datenübermittlung teilnimmt.

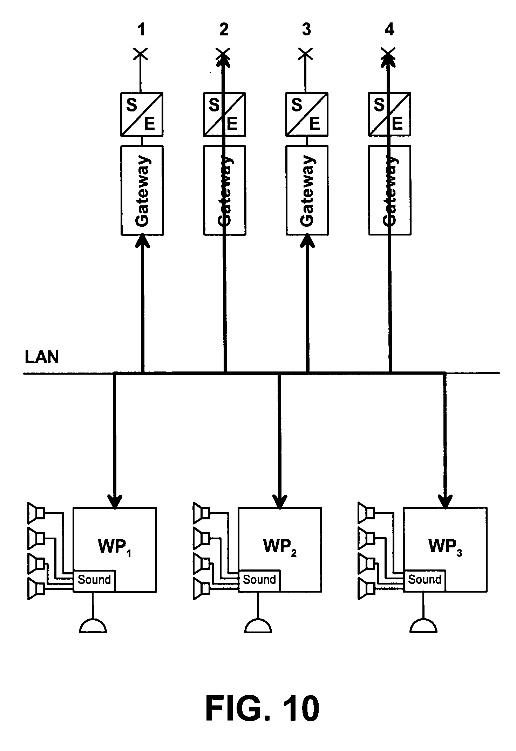

Bei Punkt-zu-Multipunkt-Adressierung, die in Figur 10 gezeigt ist, sind, in der Natur der Sache liegend, die anderen Funk-Gateways und die Arbeitsplätze für den Empfang der zwischen den Funkkanälen #2 und #4 ausgetauschten Nachrichten vorbereitet. Die Beendigung einer solcher Funk-Funk-Verbindung kann durch einen beliebigen Arbeitsplatz erfolgen, da durch das Funk-Steuerungsprotokoll alle Arbeitsplätze über die Funk-Funk-Verbindung informiert sind.

Eine bereits erwähnte Besonderheit bei der erfindungsgemäßen Einrichtung ist die Möglichkeit des Mithörens. Damit ist gemeint, daß jeder Arbeitsplatz WP über wenigstens einen Mithörlautsprecher verfügt, an dem die Audiosignale des Funkkanals und des Arbeitsplatzes, der den Funkkanal bespricht, wiedergegeben werden. Die WP-Software übernimmt dabei das Management, gegebenenfalls auch die Bestimmung, auf welchem von mehreren Mithörlautsprechern die akustische Ausgabe erfolgen soll.

Auch hier ist wieder zwischen Punkt-zu-Punkt- und Punkt-zu-Multipunkt-Adressierung zu unterscheiden.

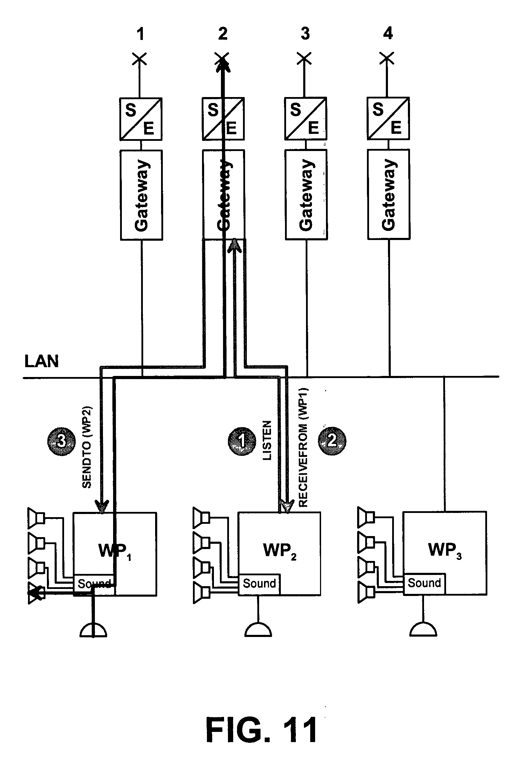

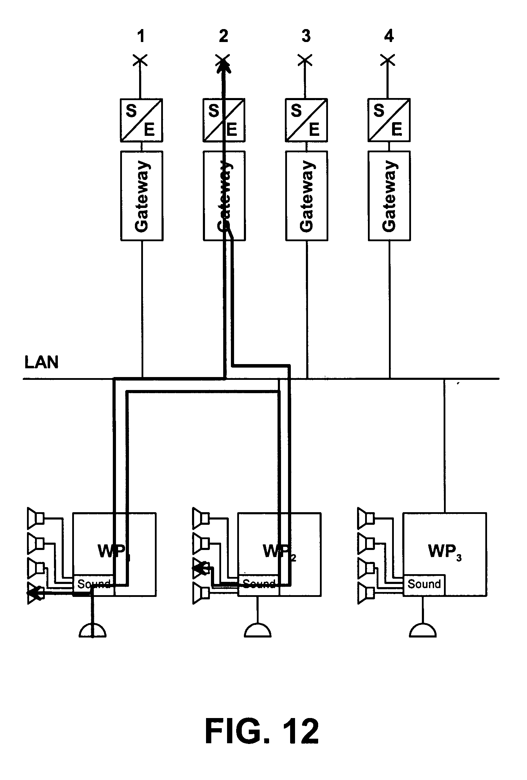

Die in den Figuren 11 und 12 gezeigte Realisierung des funkkanalbezogenen Mithörens (arbeitsplatzbezogenes Mithören entsprechend) bei Punkt-zu-Punkt-Adressierung entspricht im Wesentlichen dem Audio-Verteilungsmechanismus einer MCU, d.h. die Audio-Streams werden sequentiell verteilt.

Zu Beginn existieren aufgrund der automatischen Initialisierung des Systems beim Systemstart, wie oben beschrieben, zwischen den einzelnen Komponenten, d.h. den Funk-Gateways und den Arbeitsplätzen WP jeweils Punkt-zu-Punkt-Verbindungen. Ein Arbeitsplatz WP kann dann zum Besprechen einen Funkkanal belegen und hierdurch eine dieser bereits bestehenden Punkt-zu-Punkt-Verbindungen aktivieren. In Figur 11 ist beispielsweise eine aktivierte Punkt-zu-Punkt-Verbindung zwischen dem Arbeitsplatz WP₁ und dem Funkkanal #2 eingerichtet. Der Mithörwunsch einer WP wird an die entsprechende IP-Adresse des Funk-Gateways in Form eines bestimmten Befehls gesandt. In Figur 11 wünscht der Arbeitsplatz WP₂ das Mithören des Funkkanals #2. Das betreffende Funk-Gateway wird durch den empfangenen Befehl veranlaßt, den Audio-Stream zwischen dem Funkkanal #2 und der WP₁ auch an die Mithör-WP zu übertragen. Ferner veranlaßt das Funk-Gateway den Arbeitsplatz WP₁, seine Audiodaten auch an WP₂ zu senden, und WP₂, diese zu empfangen.

Die endgültige Einrichtung dieser Mithörmöglichkeit ist in Figur 12 dargestellt. Man erkennt dort, daß am Arbeitsplatz WP₂ die empfangene Information aus dem Funkkanal #2 und WP₁ zu einem Lautsprecher des Arbeitsplatzes WP₂ durchgeschaltet ist.

Alternativ zum oben beschriebenen Verfahren kann die Audioverteilung auch wie folgt durchgeführt werden. Für die Praxis sei zunächst angenommen, daß für den Verbindungsaufbau WP₁ durch Drücken der PTT-Taste den Funkkanal bespricht. Hierdurch wird ein Audio-Stream von WP₁ zum Funk-Gateway des Funkkanals #2 gesandt. Das Funk-Gateway verteilt nun diesen Audio-Stream zunächst an den entsprechenden Funkkanal und erst anschließend an WP₂. Bespricht ein mobiler Funkteilnehmer den Funkkanal #2, so wird der Audio-Stream vom Funk-Gateway ebenfalls sequentiell zunächst an WP₁ und dann an WP₂ verteilt.

Wird der Funkkanal durch keine WP belegt, so übergibt die mithörende WP nur den Audio-Stream des entsprechenden Funkkanals an den eigenen Mithörlautsprecher.

Belegt eine WP einen Funkkanal, der von anderen WPs mitgehört wird, so sendet das Funk-Gateway anschließend eine auf die den Mithörwunsch äußernde WP hinweisende Signalisierung an die anderen mithörenden WPs.

Beide Verfahren haben eine gewisse Sprachverzögerung zur Folge, weshalb den Mithörmöglichkeiten zahlenmäßige Grenzen gesetzt sind.

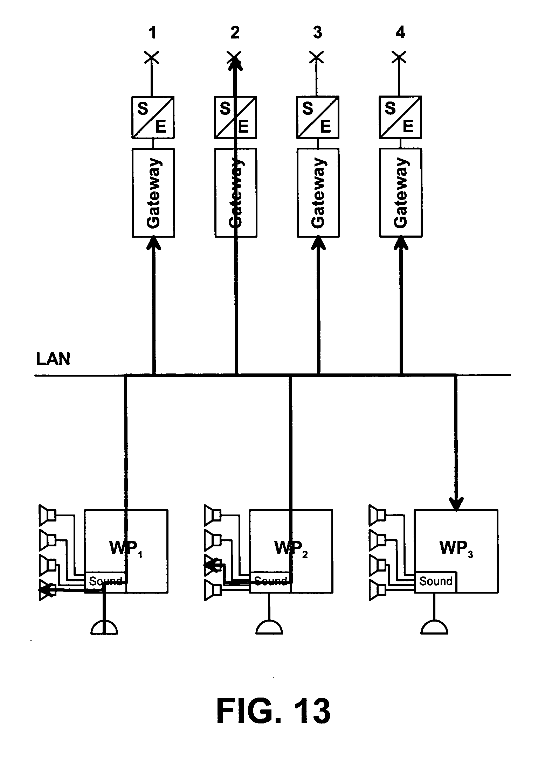

Nachfolgend wird anhand von Figur 13 die Punkt-zu-Multipunkt-Audio-Verteilung durch die WPs und Funk-Gateways erläutert. Der Grundzustand des Systems (Initialisierung und Belegen) wurde in der schon beschriebenen Weise hergestellt. Allerdings wird der Audio-Stream einer Komponente bei dieser Ausführungsform an eine Punkt-zu-Multipunkt-Adresse gesandt, so daß dieser allen Komponenten des Systems gleichzeitig zur Verfügung steht.

Ein Arbeitsplatz WP, der einen Funkkanal mithören will, muß in diesem Szenario nur noch die entsprechenden Audio-Streams auswählen und auf einem Lautsprecher ausgeben. Bespricht beispielsweise eine WP den zum Mithören gewünschten Funkkanal, so wird dieses der mithörenden WP über das Funk-Steuerungsprotokoll mitgeteilt. Sie wählt dadurch den entsprechenden Audio-Stream.

Wird der Funkkanal durch keine WP belegt, so übergibt die mithörende WP nur den Audio-Stream des entsprechenden Funkkanals an den eigenen Mithörlautsprecher.

Das Mithören eines fremden Funkkanals, der von einer WP besprochen wird, ergibt einen Echoeffekt, wenn mehrere WPs in Hörweite nebeneinander installiert sind. Der Grund hierfür ist die verzögerte Ausgabe des Audiosignals an den mithörenden WPs in Bezug zur unverzögerten Ausgabe am besprechenden WP. Dieser Effekt wird bei Punkt-zu-Punkt-Adressierung durch die sequentielle Audioverteilung verstärkt. Um Irritationen für das Personal zu vermeiden, sollte die Lautstärke an dem zu besprechenden WP und den benachbarten WPs heruntergeregelt werden, und zwar um so weiter, je näher die WPs einander benachbart sind.

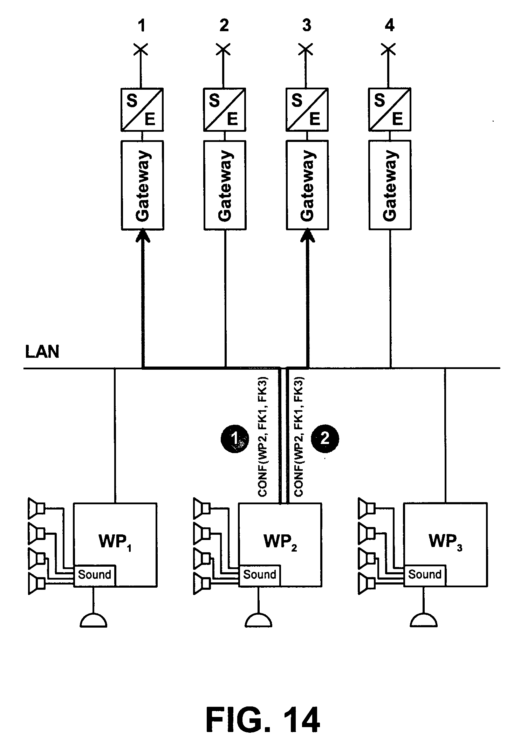

Figur 14 zeigt den Aufbau von Konferenzkommunikationen ohne MCU. Unter einer Konferenz wird nachfolgend die Simplex- bzw. Semi-Duplex-Kommunikation zwischen mindestens drei Teilnehmern (WPs, Funk-Gateways und daran angeschlossene Funkteilnehmer) verstanden. Simplex-Kommunikation oder Wechselsprechen bedeutet, daß immer nur ein Teilnehmer sprechen kann. Das Vorrecht dabei hat immer jener, der als erster seine PTT-Taste drückt. Eine Konferenz kann an einer WP entweder durch aufeinanderfolgende Wahl einzelner Funkkanäle oder durch Drücken eines speziellen Knopfes, der einer vordefinierten Konferenz zugeordnet ist, eingeleitet werden. Der Signalisierungsablauf ist jedoch für beide Verfahren identisch. Nachfolgend werden zwei Realisierungen vorgestellt.

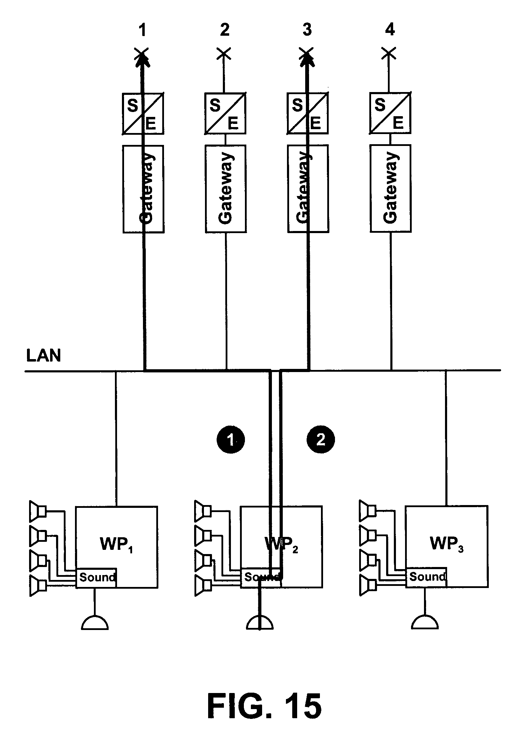

Gemäß Figur 14 existieren zu Beginn aufgrund der automatischen Initialisierung des Systems beim Systemstart zwischen den einzelnen Komponenten (Funk-Gateways und WPs) Punkt-zu-Punkt-Verbindungen, die für die Signalisierung benutzt werden. Eine Konferenz wird durch eine WP durch einen speziellen Befehl initiiert, der sequentiell an alle Konferenzteilnehmer gesandt wird. Als Parameter in dem Befehl werden die Konferenzteilnehmer übergeben. Hierdurch werden die einzelnen Komponenten veranlaßt, von allen Konferenzteilnehmern Audio-Streams entgegenzunehmen und den eigenen Audio-Stream an alle anderen Konferenzteilnehmer sequentiell zu verteilen. Gemäß Figur 14 initiiert der Arbeitsplatz WP₂ eine Konferenz mit den Funkkanälen #1 und #3. Die sequentielle Audioverteilung im Falle von Punkt-zu-Punkt-Adressierung ist in der nachfolgenden Figur 15 dargestellt.

Es werden drei Audio-Streams aktiviert, nämlich von WP₂ zum Funkkanal #1, von WP₂ zum Funkkanal #3 und vom Funkkanal #1 zum Funkkanal #3. Gemäß Figur 15 hat WP₂ durch Drücken von PTT das Vorrecht zu sprechen und sendet seinen Audio-Stream sequentiell an die Funkkanäle #1 und #3.

Soll ein weiterer Konferenzteilnehmer hinzugezogen werden, so wird der die Konferenz einrichtende Befehl um den neuen Teilnehmer erweitert und von der WP₂ an alle übrigen Teilnehmer gesandt. Die Funk-Gateways prüfen den Befehl auf Änderungen zum Istzustand und aktualisieren dann die Audio-Verteilung.

Soll hingegen ein Konferenzteilnehmer aus der Konferenz austreten, so wird analog zu oben ein entsprechender Befehl ausgesandt, und davon ausgehend wird allen anderen Konferenzteilnehmern die Änderung mitgeteilt, damit diese ihre Audio-Verteilung entsprechend aktualisieren können.

Eine Konferenz wird aufgelöst, indem ein entsprechender Befehl ohne Individualparameter an alle Konferenzteilnehmer gesandt wird.

Soll es möglich sein, daß eine unbeteiligte WP in eine bereits bestehende Konferenz eintritt, so muß sie über bereits bestehende Konferenzen informiert sein. Dieses kann bewerkstelligt werden, indem der die Konferenz aufbauende Befehl grundsätzlich an alle Komponenten gesandt wird, um diese zu informieren, auch wenn diese im einzelnen nicht an der Konferenz teilnehmen sollen.

Es versteht sich, daß in der erfindungsgemäßen Einrichtung auch an sich bekannte Maßnahmen angewendet werden können, wie beispielsweise Verschlüsselung von Daten und Nachrichten, die Übertragung von Rufsignalen als Eintonfolgen, als Mehrtonfolgen, in Form kodierter Befehle u. dgl.

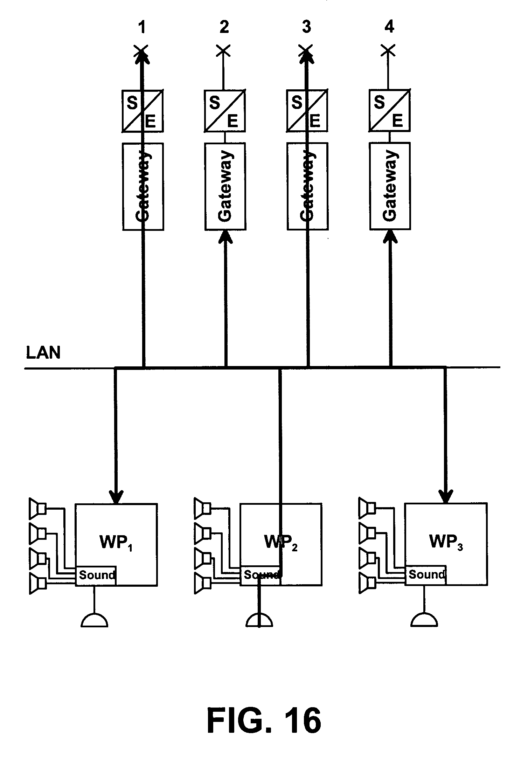

Fig. 16 zeigt schließlich die Audio-Verteilung bei Punkt-zu-Multipunkt-Adressierung. Analog zu Figur 15 hat WP₂ durch Drücken der PTT-Taste das Sprech-Vorrecht. Allerdings sendet WP₂ seinen Audio-Stream nur einmal an eine Multicast-Adresse, und nur die beteiligten Konferenzteilnehmer leiten die Audiodaten entsprechend weiter. Es treten daher keine zusätzlichen Sprachverzögerungen wie im Falle einer Punkt-zu-Punkt-Adressierung und der damit verbundenen sequentiellen Audio-Verteilung auf.

## Patentansprüche

1. Einrichtung zum Verbinden eines eine Vielzahl von Teilnehmern aufweisenden Funknetzes mit wenigstens einem drahtgebundenen Teilnehmer unter Zuhilfenahme eines paketvermittelnden Nachrichtennetzwerkes, enthaltend eine der Anzahl der unabhängig mit Funkteilnehmern zu führenden Gespräche entsprechende Anzahl von Funk-Gateways, die mit dem paketvermittelnden Netzwerk verbunden sind und Netzkanaldaten zwischen den Formaten der beiden teilnehmenden Netze umsetzen, wobei den Funk-Gateways aus dem paketvermittelnden Netzwerk jeweils ein Funk-Steuerungsprotokoll zugeführt ist, in dem funkspezifische Signalisierungen enthalten sind.

2. Einrichtung nach Anspruch 1 zum Betrieb mit einem analogen Funknetz, **dadurch gekennzeichnet, daß** jedem Funkkanal des Funknetzes ein Funk-Gateway zugeordnet ist.

3. Einrichtung nach Anspruch 1 oder 2, **dadurch gekennzeichnet, daß** die Funk-Steuerungsprotokolle durch die Nutzdatenpakete getunnelt sind.

4. Einrichtung nach Anspruch 1 oder 2, **dadurch gekennzeichnet, daß** für die Übertragung der Funk-Steuerungsprotokolle gesonderte Datenkanäle vorgesehen sind.

5. Einrichtung nach einem der vorhergehenden Ansprüche zum Betrieb mit einem digitalen Funknetz, **dadurch gekennzeichnet, daß** die Funk-Gateways mit einem Funk-Switch des digitalen Funknetzes verbunden sind, dem über die Funk-Gateways Adressinformation zugeführt ist.

6. Einrichtung nach einem der Ansprüche 1 bis 5, **dadurch gekennzeichnet, daß** das Steuerungsprotokoll die Verteilung der Nutzdaten durch eine Punkt-zu-Punkt-Adressierung vornimmt.

7. Einrichtung nach einem der Ansprüche 1 bis 5, **dadurch gekennzeichnet, daß** das Steuerungsprotokoll die Verteilung der Nutzdaten durch eine Punkt-zu-Multipunkt-Adressierung vornimmt.

8. Einrichtung nach Anspruch 6 oder 7, **dadurch gekennzeichnet, daß** im Simplexoder Semi-Duplex-Betrieb durch das Funk-Steuerungsprotokoll der aktive Sprecher bestimmt ist und nur dessen Audiodaten dem paketvermittelnden Netzwerk für die Übertragung zugeführt sind.

9. Einrichtung nach einem der vorhergehenden Ansprüche, **dadurch gekennzeichnet, daß** das Funk-Steuerungsprotokoll Konferenzeinrichtungsdaten enthält.

10. Einrichtung nach Anspruch 9, **dadurch gekennzeichnet, daß** die Konferenzeinrichtungsdaten Adressinformation der zur Konferenz zu ladenden Teilnehmer enthält.

11. Einrichtung nach Anspruch 9 oder 10, **dadurch gekennzeichnet, daß** im paketvermittelnden Netzwerk aus den einzelnen Audiodaten der Teilnehmer ein Summenaudiosignal generiert wird.

12. Einrichtung nach Anspruch 11, **dadurch gekennzeichnet, daß** wenigstens eine zentrale Einrichtung zum Bilden eines Summenaudiosignals aus allen Audiosignalen und in jedem Endpunkt des paketvermittelnden Netzwerks Einrichtungen vorgesehen sind, die aus dem empfangenen Summenaudiosignal das endpunkteigene Audiosignal unterdrücken.

13. Einrichtung nach Anspruch 11, **dadurch gekennzeichnet, daß** in jedem Endpunkt des paketvermittelnden Netzwerks Einrichtungen zum Bilden eines Summenaudiosignals aus den empfangenen fremden Audiosignalen vorhanden sind.

14. Einrichtung nach Anspruch 11, **dadurch gekennzeichnet, daß** wenigstens eine zentrale Einrichtung zum Bilden individueller Summenaudiosignale, in denen jeweils das individuelle Audiosignal des mit dem Summenaudiosignal versorgten Endpunktes unterdrückt ist, vorhanden ist.

15. Einrichtung nach einem der vorhergehenden Ansprüche, **dadurch gekennzeichnet, daß** in jedem Endpunkt des paketvermittelnden Netzwerks Einrichtungen zur aktiven Selektion der Audiodaten der an der Kommunikation beteiligten Teilnehmer und zur Übertragung der selektierten Audiodaten an ein anderes Medium vorgesehen sind.
